# EUROPEAN PATENT SPECIFICATION

(11) **EP 4 388 345 B1**
(45) Date of publication and mention of the grant of the patent: **04.11.2026**
(21) Application number: 21848296.6
(22) Date of filing: 23.12.2021
(51) Int. Cl.: G01S 17/931, G01S 7/481, G01S 17/894

(54) **ADAPTIVE AREA FLASH LIDAR SENSOR**
FLASH LIDAR SENSOR MIT ADAPTIVEM BEREICH
CAPTEUR LIDAR INSTANTANÉ À ZONE ADAPTATIVE

(30) Priority: 17.12.2021 PT 2021117650
(43) Date of publication of application: 26.06.2024
(73) Proprietor: Bosch Car Multimedia Portugal, S.A., 4705-820 Braga (PT)
(72) Inventor: KAMIL, Mustafa, 74003 Heilbronn (DE); DE CARVALHO ALBUQUERQUE, André Antunes, 4705-651 Vilaça (PT); INGRID HOLLECZEK, Annemarie, 4700-438 Braga (PT); SIMON EELES, Alexander, 4715-234 Braga (PT); AZEVEDO GASPAR, João Carlos, 4700-305 Braga (PT)
(74) Representative: Couto, Cláudia
(86) International application number: PCT/IB2021/062234
(87) International publication number: WO 2023/111676

(56) References cited:
- US-A1- 2014 063 484
- US-A1- 2016 161 218

## Description

### Technical Field

The present invention relates to an adaptive area flash LiDAR sensor for automotive applications, comprising a Micro-Opto-Electro-Mechanical systems (MOEMS) mirror array, expanding optics, and a 2D detector array, wherein the field of view is adaptively partitioned into squared areas of varying resolution and laser power, enabling enhanced detection performance in areas of interest..

### Background art

The field of automotive LiDAR sensors is currently a hot topic and there are numerous different system designs. Some of the known technologies describe the use of macro scanning LiDAR, which suffer from large sized apparatus, and were each projected pixel into the open and surrounding environment requires a laser-and-detector pair, which is not resource effective. Some solutions still require rotating mirrors to perform this detection, however the performance of the systems in terms of resolution is very low.

The key performance indicators for automotive LiDAR systems are set at maximum range, field of view (FoV), resolution, precision, and frame rate. At the same time, it is also important to have a small enclosure volume in order to integrate the LiDAR into the desired vehicle; a long lifetime span to match the increasing expected life of the vehicles; low power consumption; and low cost.

These requirements are difficult to achieve simultaneously. The requirement of a wide / maximum range needs a large receiver aperture, since the emitted laser power is limited by eye safety and the sensitivity of the detectors is limited by current developed technology. This is the main reason why macro-scanners are the most common LiDAR systems used in the automotive industry, because mechanical mirror rotation using a motor is the simplest way to move a large aperture. However, these devices have several disadvantages related to
- Excess volume due to rotating components and the motor;
- High cost due to integration of many parts;
- Reliability and lifetime issues due to mechanical rotation.

The use of Micro-Opto-Electro-Mechanical systems (MOEMS) mirrors for the beam steering of the LiDAR sensors is an alternative, which has the potential to overcome the above-mentioned problems. Said devices have a very high lifetimes expectancy; do not require additional space for rotation parts; achieve very low costs in mass production; and replacing several components in a macro scanning system. However, it is difficult to achieve the desirable large aperture and FoV for the receiver using a MOEMS mirror, which has hindered the uptake of the developed technology. MOEMS mirrors can still be created with large areas sufficient for the receiver aperture of a LiDAR system, but the physical size of these mirrors limits the scanning angle and scanning speed of these devices. Resorting to the use of an array of mirrors, it is possible to achieve better aperture values at the same time equivalent to the FoV. But even in this case, to achieve a large scanning angle, and required scanning speed, it is normally necessary to drive the micromirrors in resonance, which increases the complexity of synchronizing the mirrors, and reduces the control over the mirror. If the mirrors were driven instead in quasi-static mode, then they would be easy to synchronize, and the additional control over the mirror could be used to increase resolution and range in areas of interest. However, the scanning angle and scanning speed of mirrors driven in this way is much lower than mirrors driven in resonance. This ability to focus on a specific region would surpass currently available solutions which can only increase the resolution in one axis or increase the laser power in a specific area.

US 2014/0063484 A1 discloses techniques for determining the velocity of a moving body using a desired set of fringes generated by a spatial light modulator and the energy of the scattered light from the moving body that is measured while propagating intersecting the fringes.

US 2016/0161218 A1 discloses techniques for designating multiple targets simultaneously. It uses a light source, a switching array and a ball lens. The light beams from the switching array illuminate the backside of ball lens. The ball lens creates, independently from the switching array, highly collimated output beams used to simultaneously designate multiple targets.

This prior art documents, in particular US 2014/0063484 A1 discloses a LiDAR system comprising a laser source, a spatial light modulator, and a detector for measuring scattered light from a moving object. The system uses a desired set of fringes generated by the modulator to determine velocity. Accordingly, said document discloses a LiDAR system with a laser source and a detector, but fails to disclose or suggest the use of a MOEMS mirror array for adaptive beam steering, nor the adaptive partitioning of the field of view into dynamically adjustable squared areas with variable resolution and power control as defined in the characterizing portion of the independent claimed invention.

### Summary

The present invention relates to a LiDAR sensor comprising a MOEMS mirror array, a laser source configured to emit laser light over the MOEMS mirror array and a set of expanding optics, and a 2D detector array configured to collect return light from a reflection of the emitted laser light on an object. The field of view (FoV) is adaptively partitioned into squared areas through the MOEMS mirror array to increase the resolution and range in an area of interest. The squared areas comprise a set of dynamically adjustable large squares and a set of dynamically adjustable small squares, the latter providing higher resolution. The partitioning is based on criteria including the range, positioning, and size of the object in the area of interest. Additionally, the optical power of the emitted laser light is adapted within the FoV.

The invention is defined in the appended claims.

### General Description

The present application describes an adaptive area flash LiDAR sensor with beam steering based on Micro-Opto-Electro-Mechanical systems (MOEMS) mirrors, and resolution control using focus tunable lenses.

The adaptive area flash LiDAR system comprises a quasi-static controlled mirror set combined with beam expansion optics and fast adjustable optics for adaptive resolution control.

The proposed LiDAR system introduces several improvements to the known systems, which comprise:
- Lower cost, due to the replacement of mechanical scanning systems with MOEMS scanners;
- Reduced volume, due to the replacement of the scanning system;
- Increased detail and range in a specific area of interest, due to the innovative scanning and optical design;
- Reduced power consumption, due to the ability to reduce laser power and resolution in areas which are not interesting;
- Higher lifetime and reliability, due to the intrinsic reliability of MOEMS devices.

In addition to these improvements, the sensing performance of the LiDAR sensor, including maximum range, FoV, resolution and frame rate are also ensured and enhanced.

The sensing performance is improved particularly by the ability to increase the range and resolution in areas of interest (AOIs). It is very important to be able to achieve this high resolution and range, particularly at any given moment, but this is only usually required in a very small fraction of the total Field of View (FoV), mainly in the region which contains the road far ahead of the vehicle where the sensor is usually installed. Adaptively scanning the scene with the maximum performance reserved only for the regions where it is needed, leads to a reduced overall power consumption. Additionally, less time is used to measure uninteresting or unused areas, increasing the measurement time available for relevant areas.

Therefore, present invention discloses a LiDAR system with adaptive area flash. The FoV of the Adaptive Area Flash LiDAR is broken up into squared small areas which are illuminated with a flash, or emitted light, being the size of these areas adaptive in order to increase the resolution in the area of interest.

The return light from the emitted laser light is then imaged onto a 2D detector array. The pixel position will provide the angular direction of the received signal relative to the flash FoV area. This is combined with the mirror position, which provides the angular position of the flash area to give the precise position. The pixels of the detector array comprise one of an avalanche photodiodes (APDs), single photon avalanche photodiodes (SPADs), Multi-pixel photon counters (MPPCs) or PIN photodiodes. All of which provide high sensitivity and high response and acquisition speeds.

The emitted beam steering and detector FoV direction are both directed using a MOEMS mirror array, with the mirrors driven in quasi-static mode, i.e., reflecting light and holding its position arbitrarily according to the applied driving signals, to allow fast control over the angle selection. Beam expanding optics are also used in order to increase the FoV of the MOEMS mirrors.

The system was developed with integrated adjustable focus elements, both on the beam sending path, and on the receive path, which synchronously adjust the angle of the illuminated area and the receiver FoV. This synchronous adjustment is performed resorting to the use of local or remote decisioning electronics.

By reducing the angular divergence of the illumination and receiver FoV, more image detail is resolved, and a higher range achieved.

In addition to adapting the angular size of the emitted light, the optical power of the emitted pulse is also adapted.

For detection at long range, the highest emission power is used, which will be limited by eye safety, but for areas at closer range, lower emission power is used. This will allow to substantially reduce and optimize the power consumption.

The angular FoV of the system is expanded optically to increase the FoV of the quasi-static mode mirrors. This optical FoV expansion requires a larger mirror area, since the aperture at the mirror will be larger than at the entrance to the FoV expanding lens system. A larger mirror is possible to achieve since the mirror array is scaled up by adding additional mirror elements.

The quasi-static mode of the mirrors introduces a huge advantage since the position of the mirrors is controllable, so they do won't need to follow a pre-defined movement as in the case of resonant mirrors. They are also significantly easier to synchronize in large arrays than resonant mirrors. However, the quasi-static mode mirrors are slower and comprise a reduced FoV compared to resonant mirrors, which prevents their use in many systems. This proposed invention makes their use possible, because the multi flash method allows the mirrors to move much more slowly when compared to a raster scan, while at the same time, the beam expanding optics increase the FoV.

The beam expansion is similar to a Galilean telescope pointed backwards, so that the negative lens is at the front of the system. Parallel rays emerge still parallel through the beam expander, but with a modified angle. Beam expanders are characterized by their so-called magnification factor, defined as the ratio between the focal length of the positive and negative lenses. The magnification factor of a beam expander determines the output-to-input diameter ratio of an incident collimated beam, and it is inversely proportional to the angular amplification. Hence, if the magnification factor is less than 1, a beam expander is used to increase the FoV of the mirror (angular amplification), albeit at the expense of reducing the beam diameter.

A zoom system for adaptive resolution control is located on the opposite side of the mirror. This system focuses the received light using focus tunable optical elements, which change the magnification of the image without changing the position of the focal plane. The transmission path also has a tunable optical element to modify the beam divergence. The zoom system in the LiDAR is responsible for adjusting the size of the collected image on the detector array to match the size of the illuminated flash. The zoom system needs to be able to change zoom ratio at high speeds, as a minimum a fraction of one half of the frame rate of the LiDAR. With these speeds, the LiDAR scans all of the FoV segments that were set for the low resolution, then double the zoom and scan the rest of the FoV. A faster adjustment would allow more levels of zoom, and even allow the system to scan from segment to segment sequentially changing the zoom as from one flash to the next and thus requiring lower mirror speeds. This requirement for very fast changes in zoom ratio is the reason, the zoom lens system uses fast focus adjustable lenses, based on a set of at least two adjustable lens, as opposed to the more traditional method of mechanically moving standard lenses. Alternative technologies of adjustable lens are used to achieve similar performance, including shape changing polymer lenses, Alvarez lenses or deformable MOEMS mirrors.

The FoV is segmented into image areas without gaps. The segmentation is based on a coarse rectangular or square grid, and in the areas of interest, the coarse grid cells are broken down into smaller areas such that they fit inside the coarsest grid level. There are many different possibilities to increase the resolution in each coarse grid cells. The cell is broken into a 2x2 or 3x3 grid of smaller cells, and those are to be broken down further, and so on.

The LiDAR sensor is capable of deciding on how to segment the FoV and choose the laser emission power based on previous measurement frames, having the capability to receive instructions on how to do this from the vehicles' central processing unit.

The LiDAR has also the ability to make these decisions independently in case of sensor failure and to ensure redundancy. To achieve this feature, the LiDAR segmentation could simply base the resolution required on the distance to objects in the previous frame, with nearby objects requiring lower angular resolution. The option to have the vehicles' central processing unit making the decisions, ensures that all the information available is taken into account, including the information from other existing sensors on the vehicle, and concentrating the analysis on the area truly of interest to the autonomous driving algorithm. For example, sky areas could be identified from camera images and therefore not scanned. The area of the road ahead of the vehicle is identified from a combination of the different sensors and the highest resolution given to the road ahead at higher distances.

The developed LiDAR sensor resorts to the use of a diffractive optical element (DOE) for beam shaping the emitted beam, in order to create a rectangular beam profile, and uniformly illuminate the flash area. As previously stated, the angular divergence of the beam is adjusted to match the squared cell size of the image. This adjustment is achieved either with a focus adjustable lens, or by an active DOE (optical phase array). In the case of the active DOE the function of creating the rectangular beam shape and controlling the divergence are both performed by this one component.

In the previously described configuration of the invention, it is assumed that the required angular expansion is not too high, and therefore distortion is maintained to an acceptable level without further consideration. The alternative is to use the adjustable elements, not only to adjust the angular divergence of the rectangle, but also the shape of the beam profile so that the final emitted beam profile remains rectangular. This is achieved using active DOEs remotely controlled through local or remote controlling electronics.

The system can also be arranged to be coaxial rather than biaxial. The difference is that the transmitted laser pulse is directed down the same axis as the return path.

For the biaxial layout, separate tunable optical elements are used for the sending and receiving paths, but this need not be the case. For the coaxial layout, the same components are used for both paths and then split using a beam splitter just before the emitter and detector.

There is also the possibility to use alternative mirror technologies instead of the dual-axis quasi-static driven MOEMS mirror array.

For example, a two 1D mirror arrays, a dual-axis voice coil mirror, galvanometer mirrors, a single large area dual-axis MOEMS mirror, or any other mirror technology where the scan angle is controlled quasi-statically and used as mirrors.

There is also the possibility to use an active DOEs for the beam steering instead of the MOEMS mirrors. In this case it is also possible to use the active DOE for beam shaping and thus reducing the number of components in the system. There is also the possibility not to use the FoV expanding optics for a narrower FoV system.

Increasing the FoV, is achieved by having multiple basic system concepts arranged at different angles of the system built into the same LiDAR system.

Rather than having two options for the FoV segmentation (based on LiDAR or vehicle central processor unit instructed), the LiDAR may only have one of these options.

It is possible to use geometric optical elements such as lens-let arrays (fly's eye lenses) or Powell lenses instead of the diffractive optical element for beam shaping.

Some of the previous alternative configurations are not part of the invention as defined in the appended claims but are intended to help understanding the overall concept of the invention.

### Brief description of the drawings

For better understanding of the present application, figures representing preferred configurations are herein attached which.

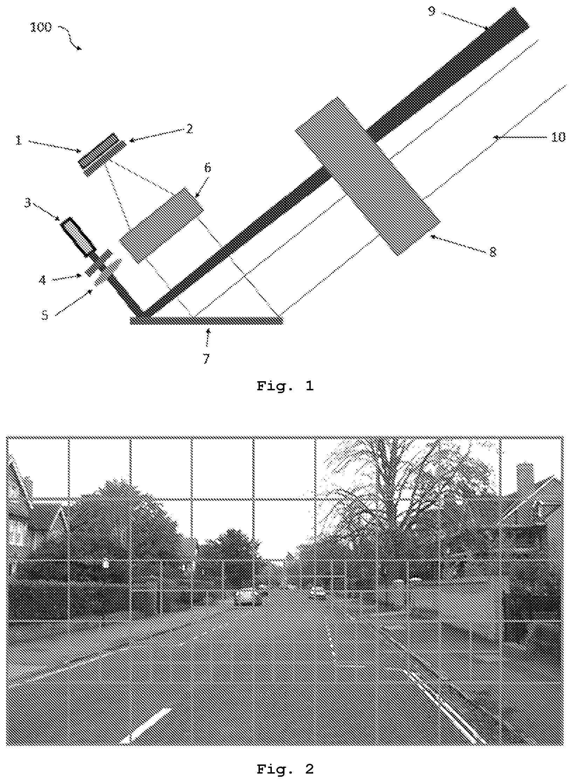

Fig. 1 represents an overall schematic of the developed LiDAR system operational principle, based on biaxial optical path emission and reception arrangement, where the reference numbers are related to:
   100 - Adaptive area flash LiDAR sensor;
   1 - 2D detector array;
   2 - band-pass filter;
   3 - laser source;
   4 - beam shaping element;
   5 - divergence adjusting optics;
   6 - adjustable zoom imaging lens system;
   7 - MOEMS Mirror array;
   8 - FoV expanding optic;
   9 - emitted laser light;
   10 - return light.
Fig. 2 illustrates how the LiDAR sensor partitions the FoV into larger and smaller squared areas of interest such that smaller or more distant objects are well resolved, without wasting time and energy on less interesting areas. The decisioning used to partition a block in further small squared areas comprises three criteria related to the range, positioning and size of the objects comprised in the area of interest.
Fig. 3 - illustrates a detailed configuration of the FoV expanding optics (8) for the emitted light (9), where the reference numbers are related to:
   7 - MOEMS Mirror array (depicted as a single mirror for easier visualization);
   81 - negative lens;
   82 - positive lens;
   9 - emitted laser light by the laser source;
   91 - reflected light A;
   92 - reflected light B;
   93 - refracted reflected light A;
   94 - refracted reflected light B;
   95 - expanded FoV refracted reflected light A;
   96 - expanded FoV refracted reflected light B.

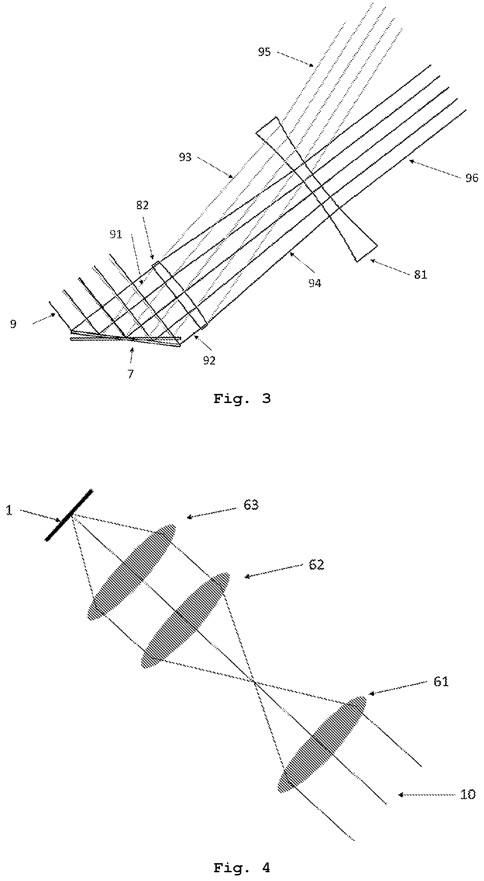

Fig. 4 - illustrates a detailed configuration of the adjustable zoom imaging lens system (6) / dioptric system, where the reference numbers are related to:
   1 - 2D detector array;
   61 - adjustable lens A;
   62 - adjustable lens B;
   63 - fixed focal length lens;
   10 - return light.

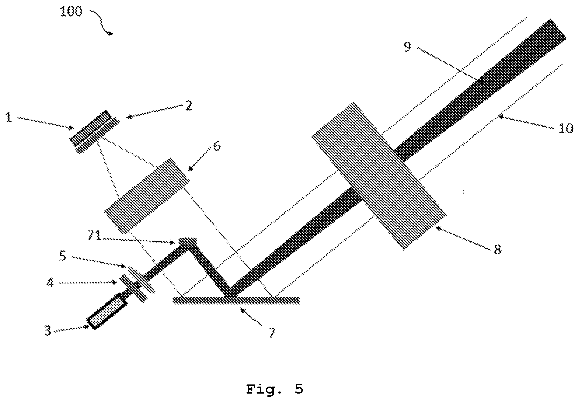

Fig. 5 - illustrates an alternative LiDAR system based on a different operational principle, i.e., with coaxial optical path emission and reception arrangement, where the reference numbers are related to:
   100 - Adaptive area flash LiDAR sensor;
   1 - 2D detector array;
   2 - band-pass filter
   3 - laser source;
   4 - beam shaping element;
   5 - divergence adjusting optics;
   6 - adjustable zoom imaging lens system;
   7 - MOEMS Mirror array;
   71 - Mirror;
   8 - FoV expanding optic;
   9 - emitted laser light;
   10 - return light.

### Description of Embodiments

With reference to the figures, some configurations are now described in more detail, which are however not intended to limit the scope of the present application.

The proposed Adaptive area flash LiDAR sensor (100) disclosed herein, comprises at least a 2D detector array (1), a band-pass filter (2), a laser source (3), a beam shaping element (4), a set of divergence adjusting optics (5), an adjustable zoom imaging lens system (6), a MOEMS Mirror array (7), and a set of FoV expanding optics (8).

Based on the proposed arrangements of Figure 1 and Figure 3, resorting to a biaxial optical path emission and reception, the emitted light (9) is initially provided by the laser source (3). After it exits this device, the emitted light (9) will travel through an optical path, sequentially passing through a beam shaping element (4) and a divergence adjusting optics (5). The light (9) will then be reflected on a MOEMS mirror array (7), with differentiated angles, that will direct the light (9) accordingly with said angles ranged between a reflected light A (91) and reflected light B (92). The light (9) will then pass through the beam adjusting optic (8) composed of positive lens (81) and negative lens (82), increasing the FoV of the emitted light (9). Resulting in an expanded FoV refracted reflected lights, ranged in between the expanded FoV refracted reflected light A (95) and expanded FoV refracted reflected light B (96), that will define the FoV range of the emitted light (9) by the LiDAR sensor. Through this FoV increase, the angle of the emitted light beam (9) is also increased but its beamwidth is reduced.

The same system arrangement is used for the reception of the reflected light, i.e., the return light (10). The mirror array (7) must be larger than the required input aperture of the system. The received light (10), after going through the reverse path of the emitted light (9), will be reflected on the mirror array (7), and then, as illustrated in Figure 1 and Figure 4, will pass through a zoom system (6), which comprised of a set of two adjustable lens, adjustable lens A (61) and adjustable lens B (62), and before reaching the 2D detector array (1), it will also pass through a fixed focal length lens (63) and band pass filter (2).

Still with regard to Figure 4, it discloses one configuration for the zoom system (6), which comprises a set of two adjustable lens, adjustable lens A (61) and adjustable lens B (62). The adjustable lenses A and B change their focal length in a synchronized way, controlled through electronic arrangements, such that the resulting captured image remains focused on the sensor array (1), although the zoom changes. Since both lenses (61, 62) remain in the same position, the system is faster than traditional zoom systems where the lenses move relative to each other. Other lens or mirror combinations comprise catoptric or catadioptric systems. Adjustable lens A (61), and adjustable lens B (62) both comprise the use of convex lenses, the use of concave lenses, or a combination thereof.

Figure 1 discloses a biaxial arrangement, where both the laser source (3) and the detector array (2) are place aside and aligned with the MOEMS mirror array (7). The resulting lights, emitted light (9) and return light (10), will exit the LiDAR sensor (100) parallel and side-by-side, within an aligned angle with the MOEMS mirror (7).

The layout represented on figure 5, describes a coaxial arrangement. The major differences are related with the fact that emitted light (9), instead of being only arranged parallel and aside to the return light (10), it is parallel and incorporated within the range of the FoV of the return light (10). To achieve this, the only modification with regard to the biaxial layout, is based on the fact that the source laser (3) is arranged in a way that the emitted light (9) by the laser source (3) is at an angle to the path described by the return light (10) prior to achieving the sensor array (1). After exiting the source (3), the emitted light (9) will travel through an optical path, sequentially passing through a beam shaping element (4) and a divergence adjusting optics (5), further being reflected on a mirror arrangement (71) after which the emitted light (9) will be parallel with and the return light (10) at the same position. The emitted light beam (9) then reflect on the MOEMS mirror array (7), with differentiated angles, that will reflect the light accordingly with said angles ranged between a reflected light A (91) and reflected light B (92), increasing the FoV of the emitted light (9).

The light (9) will then pass through the beam adjusting optic (8), composed of positive lens (81) and negative lens (82), increasing the FoV of the emitted light (9). Resulting in an expanded FoV refracted reflected lights, ranged in between the expanded FoV refracted reflected light A (95) and expanded FoV refracted reflected light B (96), that will define the FoV range of the emitted light (9) by the LiDAR sensor (100).

As illustrated on image 5 the key differentiating feature is the mirror arrangement (71) and the positioning of the laser source (3) and both beam shaping element (4) and divergence adjusting optics (5).
arrangement, where both the laser source (3) and the detector array (2) are place aside and aligned with the MOEMS mirror array (7). The resulting lights, emitted light (9) and return light (10), will exit the LiDAR sensor (100) parallel and side-by-side, within an aligned angle with the MOEMS mirror (7).

One of the alternative layouts, represented on figure 5, describes a coaxial arrangement. The major differences are related with the fact that emitted light (9), instead of being only arranged parallel and aside to the return light (10), it is parallel and incorporated within the range of the FoV of the return light (10). To achieve this, the only modification with regard to the biaxial layout, is based on the fact that the source laser (3) is arranged in a way that the emitted light (9) by the laser source (3) is at an angle to the path described by the return light (10) prior to achieving the sensor array (1). After exiting the source (3), the emitted light (9) will travel through an optical path, sequentially passing through a beam shaping element (4) and a divergence adjusting optics (5), further being reflected on a mirror arrangement (71) after which the emitted light (9) will be parallel with and the return light (10) at the same position. The emitted light beam (9) then reflect on the MOEMS mirror array (7), with differentiated angles, that will reflect the light accordingly with said angles ranged between a reflected light A (91) and reflected light B (92), increasing the FoV of the emitted light (9). The light (9) will then pass through the beam adjusting optic (8), composed of positive lens (81) and negative lens (82), increasing the FoV of the emitted light (9). Resulting in an expanded FoV refracted reflected lights, ranged in between the expanded FoV refracted reflected light A (95) and expanded FoV refracted reflected light B (96), that will define the FoV range of the emitted light (9) by the LiDAR sensor (100).

As illustrated on image 5 the key differentiating feature is the mirror arrangement (71) and the positioning of the laser source (3) and both beam shaping element (4) and divergence adjusting optics (5).

## Claims

1. LiDAR sensor (100) comprising
a MOEMS mirror array (7);
a set of expanding optics configured to expand or reduce a FoV;
a laser source (3), configured to emit a laser light (9) over the MOEMS mirror array (7) in a predetermined angle and the set of expanding optics; and
a 2D detector array (1), configured to collect a return light (10) from a reflection of the emitted laser light (9) on an object to be detected;
**characterised in that**:
the FoV is adaptively partitioned into squared areas through the MOEMS mirror array (7) to increase the resolution and range of an area of interest of the sensor (100), wherein the squared areas comprise a set of dynamically adjustable large squares and a set of dynamically adjustable small squares, the dynamically adjustable small squares comprising higher resolution than the dynamically adjustable large squares and wherein criteria for partition use range, positioning and size of the object comprised in the area of interest,
and **in that**:
the optical power of the emitted laser light (9) is adapted within the FoV.

2. LiDAR sensor according to claim 1, wherein the set of expanding optics comprise at least a beam shaping element (4), a divergence adjusting optics (5) and a FoV expanding optic (8).

3. LiDAR sensor according to any of the previous claims, comprising an adjustable zoom imaging lens system (6).

4. LiDAR sensor according to claim 3, wherein the adjustable zoom imaging lens system (6) is configured to synchronously change the focal length to ensure the focus of the collected return light (10) on the 2D detector array (1) and expand or reduce the FoV.

5. LiDAR sensor according to claim 3 or 4, wherein the adjustable zoom imaging lens system (6) comprises at least one of an adjustable lens A (61), an adjustable lens B (62) and/or a fixed focal length lens (63), positioned between the 2D detector array (1) and the MOEMS Mirror array (7).

6. LiDAR sensor according to any of the previous claims, comprising a band-pass filter (2) positioned between the 2D detector array (1) and the adjustable zoom imaging lens system (6).

7. LiDAR sensor according to previous claim 1, wherein the emitted laser light (9) and the return light (10) pass through the FoV expanding optic (8) and focus on the MOEMS Mirror array (7) in a parallel arrangement.

8. LiDAR sensor according to previous claim 1, wherein the emitted laser light (9) and the return light (10) pass through the FoV expanding optic (8) and focus on the MOEMS Mirror array (7) in a parallel arrangement, with the emitted laser light (9) centrally embedded in the FoV of the return light (10) in a coaxial arrangement.

9. LiDAR sensor according to any of the previous claims, comprising a mirror (71) configured to direct the emitted laser light (9) towards the MOEMS Mirror array (7) in a coaxial arrangement with regard to the FoV of the return light (10) .

10. LiDAR sensor according to previous claim 1 and 3, wherein the set of expanding optics and the adjustable zoom imaging lens system (6) are configured to synchronously adjust the angular size of the emitted laser light (9) and the return light (10).

11. LiDAR sensor according to previous claim 2, wherein the FoV expanding optic (8) comprises at least one of a positive lens (81) and/or negative lens (82).

## Patentansprüche

1. LiDAR-Sensor (100) umfassend
ein MOEMS -Spiegelarray (7);
einen Satz von Erweiterungsoptiken, die dazu ausgelegt sind, ein Sichtfeld (FoV) zu erweitern oder zu verkleinern;
eine Laserquelle (3), die konfiguriert ist, dass sie Laserlicht (9) in einem vorgegebenen Winkel über das MOEMS-Spiegelarray (7) und den Satz von Erweiterungsoptiken aussendet; und
ein 2D-Detektorarray (1), das konfiguriert ist, dass es das von einem zu erfassenden Objekt reflektierte Rücklicht (10) des ausgesendeten Laserlichts (9) erfasst;
**dadurch gekennzeichnet, dass**:
das Sichtfeld durch das MOEMS-Spiegelarray (7) adaptiv in quadratische Bereiche angepasst wird, um die Auflösung und den Erfassungsbereich eines interessierenden Bereichs des Sensors (100) zu erhöhen, wobei die quadratischen Bereiche einen Satz dynamisch einstellbarer großer Quadrate und einen Satz dynamisch einstellbarer kleiner Quadrate umfassen, wobei die dynamisch einstellbaren kleinen Quadrate eine höhere Auflösung aufweisen als die dynamisch einstellbaren großen Quadrate und wobei die Kriterien für die Unterteilung die Reichweite, die Positionierung und die Größe des im Bereich von Interesse enthaltenen Objekts umfassen, und dadurch, dass:
die optische Leistung des emittierten Laserlichts (9) innerhalb des Sichtfelds angepasst wird.

2. LiDAR-Sensor nach Anspruch 1, wobei die Anordnung von Optikelementen zur Erweiterung des Sichtfeldes mindestens ein Strahlformungselement (4), eine Divergenzeinstelloptik (5) und ein Optikelement zur Erweiterung des Sichtfeldes (8) umfasst.

3. LiDAR-Sensor nach einem der vorhergehenden Ansprüche, umfassend ein einstellbares Zoom-Bildobjektivsystem (6).

4. LiDAR-Sensor nach Anspruch 3, wobei das einstellbare Zoom-Bildobjektivsystem (6) so konfiguriert ist, dass es die Brennweite synchron ändert, um den Fokus des gesammelten Rücklichts (10) auf dem 2D-Detektorarray (1) sicherzustellen und das Sichtfeld zu erweitern oder zu reduzieren.

5. LiDAR-Sensor nach Anspruch 3 oder 4, wobei das Zoom-Bildobjektivsystem (6) mindestens eine der folgenden Komponenten umfasst: eine zoomfähige Objektivlinse A (61), eine zoomfähige Objektivlinse B (62) und/oder eine Objektivlinse mit fester Brennweite (63), die zwischen dem 2D-Detektorarray (1) und dem MOEMS-Spiegelarray (7) angeordnet ist.

6. LiDAR-Sensor nach einem der vorstehenden Ansprüche, umfassend ein Bandpassfilter (2), das zwischen dem 2D-Detektorarray (1) und dem Zoom-Bildobjektivsystem (6) angeordnet ist.

7. LiDAR-Sensor nach dem vorstehenden Anspruch 1, wobei das emittierte Laserlicht (9) und das Rücklicht (10) die Sichtfeldvergrößerungsoptik (8) durchlaufen und in einer parallelen Anordnung auf das MOEMS-Spiegelarray (7) fokussiert werden.

8. LiDAR-Sensor nach dem vorstehenden Anspruch 1, wobei das emittierte Laserlicht (9) und das Rücklicht (10) die Sichtfeldvergrößerungsoptik (8) durchlaufen und in einer parallelen Anordnung auf das MOEMS-Spiegelarray (7) fokussiert werden, wobei das emittierte Laserlicht (9) in einer koaxialen Anordnung zentral in das Sichtfeld des Rücklichts (10) eingebettet ist.

9. LiDAR-Sensor nach einem der vorstehenden Ansprüche, umfassend einen Spiegel (71), der so konfiguriert ist, dass er das emittierte Laserlicht (9) in einer koaxialen Anordnung in Bezug auf das Sichtfeld des Rücklichts (10) auf das MOEMS-Spiegelarray (7) richtet.

10. LiDAR- Sensor nach den vorstehenden Ansprüchen 1 und 3, wobei der Satz von Erweiterungsoptiken und das einstellbare Zoom-Bildobjektivsystem (6) konfiguriert sind, sodass sie die Winkelgröße des ausgesendeten Laserlichts (9) und des Rücklichts (10) synchron anpassen.

11. LiDAR-Sensor nach dem vorstehenden Anspruch 2, wobei die Sichtfelderweiterungsoptik (8) mindestens eine positive Linse (81) und/oder eine negative Linse (82) umfasst.

## Revendications

1. Capteur LiDAR (100) comprenant
une matrice de miroirs MOEMS (7) ;
un ensemble d'optiques d'expansion configuré pour agrandir ou réduire un FoV ;
une source laser (3), configurée pour émettre une lumière laser (9) sur la matrice de miroirs MOEMS (7) selon un angle prédéterminé et l'ensemble d'optiques d'expansion ; et
une matrice de détecteurs 2D (1), configurée pour collecter une lumière de retour (10) provenant d'une réflexion de la lumière laser émise (9) sur un objet à détecter ;
**caractérisé en ce que** :
le FoV est adaptativement partitionné en zones carrées par l'intermédiaire de la matrice de miroirs MOEMS (7) pour augmenter la résolution et la portée d'une zone d'intérêt du capteur (100), dans lequel les zones carrées comprennent un ensemble de grands carrés dynamiquement réglables et un ensemble de petits carrés dynamiquement réglables, les petits carrés dynamiquement réglables comprenant une résolution plus élevée que les grands carrés dynamiquement réglables et
dans lequel des critères de partition utilisent la portée, le positionnement et la taille de l'objet compris dans la zone d'intérêt, et **en ce que** :
la puissance optique de la lumière laser émise (9) est adaptée à l'intérieur du FoV.

2. Capteur LiDAR selon la revendication 1, dans lequel l'ensemble d'optiques d'expansion comprend au moins un élément de mise en forme de faisceau (4), une optique de réglage de divergence (5) et une optique d'expansion du FoV (8).

3. Capteur LiDAR selon l'une quelconque des revendications précédentes, dans lequel il comprend un système de lentilles d'imagerie à zoom réglable (6).

4. Capteur LiDAR selon la revendication 3, dans lequel le système de lentilles d'imagerie à zoom réglable (6) est configuré pour modifier de manière synchrone la distance focale afin d'assurer la mise au point de la lumière de retour collectée (10) sur la matrice de détecteurs 2D (1) et agrandir ou réduire le FoV.

5. Capteur LiDAR selon l'une quelconque des revendications 3 ou 4, dans lequel le système de lentilles d'imagerie à zoom réglable (6) comprend au moins l'une parmi une lentille réglable A (61), une lentille réglable B (62) et/ou une lentille à focale fixe (63), positionnée(s) entre la matrice de détecteurs 2D (1) et la matrice de miroirs MOEMS (7).

6. Capteur LiDAR selon l'une quelconque des revendications précédentes, dans lequel il comprend un filtre passe-bande (2) positionné entre la matrice de détecteurs 2D (1) et le système de lentilles d'imagerie à zoom réglable (6).

7. Capteur LiDAR selon la revendication précédente 1, dans lequel la lumière laser émise (9) et la lumière de retour (10) passent à travers l'optique d'expansion du FoV (8) et se focalisent sur la matrice de miroirs MOEMS (7) selon un agencement parallèle.

8. Capteur LiDAR selon la revendication précédente 1, dans lequel la lumière laser émise (9) et la lumière de retour (10) passent à travers l'optique d'expansion du FoV (8) et se focalisent sur la matrice de miroirs MOEMS (7) selon un agencement parallèle, la lumière laser émise (9) étant intégrée de manière centrale dans le FoV de la lumière de retour (10) selon un agencement coaxial.

9. Capteur LiDAR selon l'une quelconque des revendications précédentes, dans lequel il comprend un miroir (71) configuré pour diriger la lumière laser émise (9) vers la matrice de miroirs MOEMS (7) selon un agencement coaxial par rapport au FoV de la lumière de retour (10).

10. Capteur LIDAR selon les revendications précédentes 1 et 3, dans lequel l'ensemble d'optiques d'expansion et le système de lentilles d'imagerie à zoom réglable (6) sont configurés pour régler de manière synchrone la taille angulaire de la lumière laser émise (9) et de la lumière de retour (10).

11. Capteur LIDAR selon la revendication précédente 2, dans lequel l'optique d'expansion du FoV (8) comprend au moins l'une parmi une lentille positive (81) et/ou une lentille négative (82).
